# EUROPÄISCHE PATENTSCHRIFT

(11) **EP 4 343 068 B1**
(45) Veröffentlichungstag und Bekanntmachung des Hinweises auf die Patenterteilung: **05.11.2025**
(21) Anmeldenummer: 23198996.3
(22) Anmeldetag: 22.09.2023
(51) Int. Cl.: E02F 9/22

(54) **VERFAHREN ZUR STEUERUNG EINES HYDRAULISCHEN ANTRIEBSSYSTEMS EINER ARBEITSMASCHINE UND HYDRAULISCHES ANTRIEBSSYSTEM**
METHOD FOR CONTROLLING A HYDRAULIC DRIVE SYSTEM OF A WORKING MACHINE AND HYDRAULIC DRIVE SYSTEM
PROCÉDÉ DE COMMANDE D'UN SYSTÈME D'ENTRAÎNEMENT HYDRAULIQUE D'UNE MACHINE DE TRAVAIL ET SYSTÈME D'ENTRAÎNEMENT HYDRAULIQUE

(30) Priorität: 26.09.2022 DE 102022210108
(43) Veröffentlichungstag der Anmeldung: 27.03.2024
(73) Patentinhaber: Robert Bosch GmbH, 70442 Stuttgart (DE)
(72) Erfinder: Naumann, Sven-Ruediger, 31515 Wunstorf (DE); Frerker, Marc, 29690 Schwarmstedt (DE)

(56) Entgegenhaltungen:
- EP-A1- 3 623 665

## Beschreibung

Die vorliegende Erfindung betrifft ein Verfahren zur Steuerung eines hydraulischen Antriebssystems und ein hydraulisches Antriebssystem sowie eine Recheneinheit und ein Computerprogramm zur Ausführung des Verfahrens.

### Hintergrund der Erfindung

Bei mobilen Arbeitsmaschinen, deren Fahrantrieb hydraulisch erfolgt, kann ein Arbeitswerkzeug, beispielsweise eine Fräse, vorgesehen sein, das ebenfalls hydraulisch angetrieben wird. Dabei kann eine gesonderte Hydraulikpumpe für das Arbeitswerkzeug vorgesehen sein. Die Hydraulikpumpe für das Arbeitswerkzeug und wenigstens eine Hydraulikpumpe des Fahrantriebs können gemeinsam von einem Verbrennungsmotor, insbesondere einem Dieselmotor, angetrieben sein.

Aus dem Stand der Technik ist die Patentschrift EP 3 623 665 A1 bekannt.

### Offenbarung der Erfindung

Erfindungsgemäß werden ein Verfahren zur Steuerung eines hydraulischen Antriebssystems und ein hydraulisches Antriebssystem sowie eine Recheneinheit und ein Computerprogramm zur Ausführung des Verfahrens mit den Merkmalen der unabhängigen Patentansprüche vorgeschlagen. Vorteilhafte Ausgestaltungen sind Gegenstand der Unteransprüche sowie der nachfolgenden Beschreibung.

Die Erfindung bedient sich der Maßnahme, in einem hydraulischen Antriebssystem einer mobilen Arbeitsmaschine, das einen Fahrantrieb und einen Arbeitsantrieb aufweist, eine Geschwindigkeitsregelung einer Fahrgeschwindigkeit zu implementieren, bis ein Arbeitsdruck des Arbeitsantriebs einen vorgegebenen, optional einstellbaren, Grenzdruck überschreitet oder bis eine Arbeitsleistung des Arbeitsantriebs eine vorgegebene, optional einstellbare, Grenzleistung überschreitet. Bei Überschreiten des Grenzdrucks bzw. der Grenzleistung wird zu einer Druckregelung des Arbeitsdrucks entsprechend einem Solldruck oder zu einer Leistungsregelung der Arbeitsleistung entsprechen einer Sollleistung übergegangen, wobei durch die Druckregelung bzw. die Leistungsregelung eine Ansteuergröße des Fahrantriebs (z.B. der Fahr-Hydraulikpumpe) verstellt bzw. geändert wird. D.h. durch die Druckregelung wird der Arbeitsdruck auf den Solldruck geregelt bzw. durch die Leistungsregelung wird die Arbeitsleistung auf die Sollleistung geregelt, wobei, um selbiges zu erreichen, die Ansteuergröße im Fahrantrieb verstellt bzw. geändert wird. Durch den Übergang zu einer Druckregelung bei Überschreiten des Grenzdrucks bzw. zu einer Leistungsregelung bei Überschreiten der Grenzleistung durch den hydraulischen Arbeitsantrieb wird eine Bedämpfung des Steuerverhaltens des Fahrantriebs erreicht, so dass ein feinfühliges Fahren der mobilen Arbeitsmaschine erreicht werden kann. Insbesondere kann eine starke Drückung des Verbrennungsmotors, typischerweise ein Dieselmotor, vermieden werden, bevor ein Grenzlastregler eingreift.

An die mobile Arbeitsmaschine ist ein Arbeitswerkzeug anbaubar oder angebaut, das durch den Arbeitsantrieb angetrieben wird bzw. werden kann, wenn es angebaut ist. Bei der mobilen Arbeitsmaschine kann es sich z.B. um ein Kommunalfahrzeug, Winterfahrzeug, ein Minenräumfahrzeug oder Ähnliches handeln. Bei dem Arbeitswerkzeug kann es sich z.B. um eine Fräse (etwa eine Schneefräse, eine Loipenfräse oder eine Grabenfräse), ein Mähwerk usw. handeln, das als Anbaugerät verwendet wird. Insbesondere werden die wenigstens eine Fahr-Hydraulikpumpe und die Arbeits-Hydraulikpumpe gemeinsam von einer Energiequelle, z.B. einem Verbrennungsmotor oder einem Elektromotor, angetrieben.

Die Begriffe "Arbeitsdruck" und "Arbeitsleistung" beziehen sich auf einen hydraulischen Druck im Arbeitsantrieb bzw. eine Leistung (etwa hydraulische Leistung) im Arbeitsantrieb.

Die Ansteuergröße des Fahrantriebs kann (regelungstechnisch) als eine Stellgröße der Druckregelung bzw. der Leistungsregelung angesehen werden. Es können auch mehrere Ansteuergrößen verändert bzw. verstellt werden, es wird also wenigstens eine Ansteuergröße des Fahrantriebs verstellt bzw. geändert. Der Arbeitsdruck bzw. die Arbeitsleistung kann als Regelgröße angehen werden; der Solldruck bzw. die Sollleistung kann als Führungsgröße angesehen werden.

Als Ansteuergröße kann eine Größe bzw. ein Parameter des Fahrantriebs verwendet werden, die angesteuert werden kann und die Operation des Fahrantriebs beeinflusst. Als Beispiel kann die Ansteuergröße ein Schwenkwinkel bzw. eine Verdrängung der Fahr-Hydraulikpumpe sein; oder es könnte ein Ventil im Fahrantrieb angesteuert werden, wobei ein Steuersignal für das Ventil die Ansteuergröße darstellt. Weitergehend kann auch ein Sollwert einer Steuerung oder Regelung des Fahrantriebs, etwa eine Soll-Fahrgeschwindigkeit oder eine Soll-Fahrantriebsleistung, als Ansteuergröße verwendet werden (z.B. im Sinne einer kaskadierten Regelung).

In einer Ausgestaltung wird beim Überschreiten des Grenzdrucks bzw. der Grenzleistung die Fahrgeschwindigkeit reduziert. Auf diese Weise wird die Belastung des Arbeitswerkzeugs reduziert. Beispielsweise muss bei geringerer Geschwindigkeit eine geringere Fräsleistung aufgebracht werden. Die Reduzierung ist Folge des Übergangs in die Druckregelung der Fahr-Hydraulikpumpe. Die Geschwindigkeit sinkt, um den Solldruck einhalten zu können.

In einer Ausgestaltung wird, wenn während der Druckregelung der Arbeitsdruck einen Schwellendruck, der kleiner oder gleich dem Grenzdruck ist, unterschreitet, bzw. wenn während der Leistungsregelung die Arbeitsleistung eine Schwellenleistung, die kleiner oder gleich der Grenzleistung ist, unterschreitet, wieder zu der Geschwindigkeitsregelung der Fahrgeschwindigkeit entsprechend der Soll-Fahrgeschwindigkeit oder einer geänderten (insbesondere verringerten) Soll-Fahrgeschwindigkeit übergegangen. Dadurch kann sichergestellt werden, dass nicht sofort wieder zur Druckregelung bzw. Leistungsregelung übergegangen wird. Insbesondere ist der Schwellendruck kleiner als der Grenzdruck bzw. die Schwellenleistung kleiner als die Grenzleistung. Ein wiederholtes Hin- und Herschalten zwischen Geschwindigkeitsregelung und Druck- bzw. Leistungsregelung in kurzen Zeitabständen kann dadurch vermieden werden.

In einer Ausgestaltung ist der Schwellendruck größer als der Solldruck oder gleich dem Solldruck bzw. ist die Schwellenleistung größer als die Sollleistung oder gleich der Solleistung. Bei der Druckregelung ist zu Beginn der Arbeitsdruck größer als der Solldruck, d.h. der Arbeitsdruck wird durch die Druckregelung verringert (heruntergeregelt), wobei es zu einem Überschwingen, d.h. Unterschreiten des Solldrucks, kommen kann, beispielsweise wenn die Druckregelung eine hohe Dynamik aufweist (etwa Proportional-Glied relativ großer Verstärkungskonstante). Dies entspricht dem Fall, dass der Schwelldruck gleich dem Solldruck ist, d.h. sobald das Ziel, nämlich der Solldruck, erreicht ist, wird unmittelbar zur Geschwindigkeitsregelung übergegangen. Ähnliches gilt für den Fall einer Leistungsregelung Insbesondere ist auch denkbar, dass sowohl der Schwellendruck als auch der Solldruck gleich dem Grenzdruck sind, bzw. dass sowohl die Schwellenleistung als auch die Sollleistung gleich der Grenzleistung sind.

In einer Ausgestaltung umfasst die Druckregelung bzw. die Leistungsregelung einen Integral-Anteil (bzw. ein Integral-Glied), wobei während der Regelung der Fahrgeschwindigkeit entsprechend der Soll-Fahrgeschwindigkeit und/oder beim Übergang (bzw. bei Überschreiten des Grenzdrucks bzw. der Grenzleistung) zur Druckregelung bzw. zur Leistungsregelung und/oder gegebenenfalls beim Übergang zur Regelung der Fahrgeschwindigkeit entsprechend der Soll-Fahrgeschwindigkeit der Integral-Anteil auf null gesetzt wird. Dadurch wird bei einem erneuten Übergang zur Druck- bzw. Leistungsregelung ein ruckartiges Verhalten aufgrund eins eventuell noch bestehenden Integral-Anteils vermieden.

Weiter optional wird eine obere Integralgrenze des (Integral-Anteils) dynamisch eingestellt. Dies kann z.B. über geeignete Parameter erfolgen.

Optional ist der Grenzdruck bzw. die Grenzleistung einstellbar. Dies erlaubt z.B. eine Anpassung an verschiedene anbaubare Arbeitswerkzeuge. Ebenso optional können bzw. kann der Solldruck und/oder der Schwellendruck bzw. die Sollleistung und/oder die Schwellenleistung einstellbar sein.

Eine erfindungsgemäße Recheneinheit, z.B. ein Steuergerät einer mobilen Arbeitsmaschine, ist, insbesondere programmtechnisch, dazu eingerichtet, ein erfindungsgemäßes Verfahren durchzuführen.

Ein erfindungsgemäßes hydraulisches Antriebssystem einer mobilen Arbeitsmaschine, an die ein Arbeitswerkzeug angebaut oder anbaubar ist, weist einen hydraulischen Fahrantrieb mit wenigstens einer verstellbaren Fahr-Hydraulikpumpe und einen hydraulischen Arbeitsantrieb für das Arbeitswerkzeug mit einer (insbesondere verstellbaren) Arbeits-Hydraulikpumpe auf; weiter eine erfindungsgemäße Recheneinheit, die zur Steuerung des hydraulischen Fahrantriebs und des hydraulischen Arbeitsantriebs verwendet wird. Insbesondere werden die wenigstens eine Fahr-Hydraulikpumpe und die Arbeits-Hydraulikpumpe gemeinsam von einer Energiequelle, z.B. einem Verbrennungsmotor oder einem Elektromotor, angetrieben.

Auch die Implementierung eines erfindungsgemäßen Verfahrens in Form eines Computerprogramms oder Computerprogrammprodukts mit Programmcode zur Durchführung aller Verfahrensschritte ist vorteilhaft, da dies besonders geringe Kosten verursacht, insbesondere wenn ein ausführendes Steuergerät noch für weitere Aufgaben genutzt wird und daher ohnehin vorhanden ist. Geeignete Datenträger zur Bereitstellung des Computerprogramms sind insbesondere magnetische, optische und elektrische Speicher, wie z.B. Festplatten, Flash-Speicher, EEPROMs, DVDs u.a.m. Auch ein Download eines Programms über Computernetze (Internet, Intranet usw.) ist möglich.

Weitere Vorteile und Ausgestaltungen der Erfindung ergeben sich aus der Beschreibung und der beiliegenden Zeichnung.

Es versteht sich, dass die vorstehend genannten und die nachfolgend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

Figur 1 zeigt stark vereinfacht ein beispielhaftes hydraulisches Antriebssystem einer mobilen Arbeitsmaschine mit einem Arbeitswerkzeug.
Figur 2 zeigt ein Ablaufdiagramm gemäß einer beispielhaften Implementierung des Verfahrens zum Betreiben eines hydraulischen Antriebssystems einer mobilen Arbeitsmaschine mit einem Arbeitswerkzeug.

### Detaillierte Beschreibung der Zeichnung

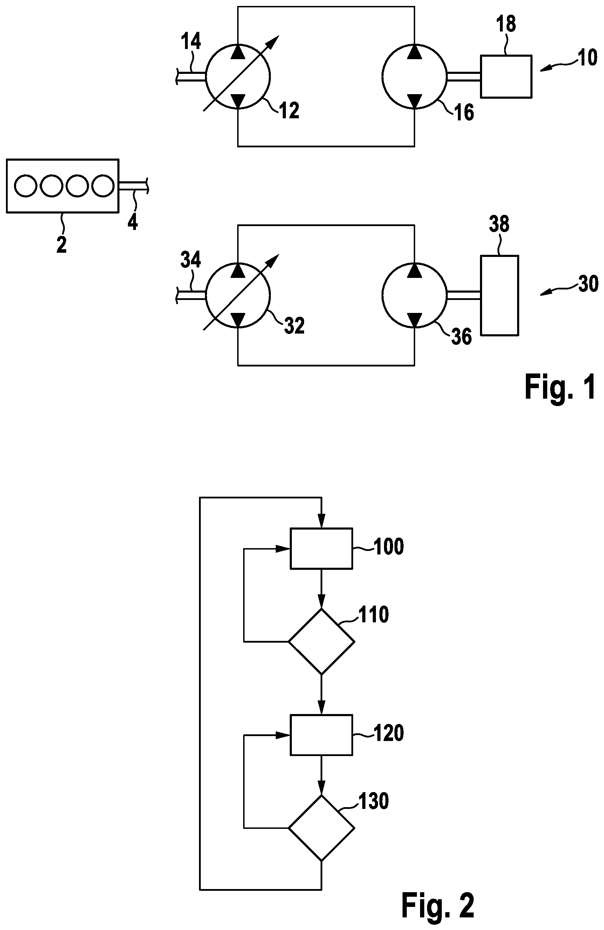

Figur 1 zeigt stark vereinfacht ein beispielhaftes hydraulisches Antriebssystem einer mobilen Arbeitsmaschine mit einem Arbeitswerkzeug bzw. Anbaugerät. Das hydraulische Antriebssystem weist einen hydraulischen Fahrantrieb 10 und einen hydraulischen Arbeitsantrieb 30 auf. Weiter kann eine Steuerung (Recheneinheit) für das hydraulische Antriebssystem vorgesehen sein (nicht dargestellt), die insbesondere dazu eingerichtet ist, ein erfindungsgemäßes Verfahren durchzuführen.

Der hydraulische Fahrantrieb 10 weist eine verstellbare Fahr-Hydraulikpumpe 12, die über eine Antriebswelle 14 angetrieben wird, und einen Fahr-Hydraulikmotor 16 auf, der über einen (hier geschlossenen) Hydraulikkreis mit der Fahr-Hydraulikpumpe 12 gekoppelt ist (d.h. über Hydraulikleitungen und im Allgemeinen nicht weiter dargestellte Ventile fluidisch verbunden ist). Eine Abtriebswelle des Fahr-Hydraulikmotors 16 ist direkt oder indirekt, z.B. über ein Getriebe 18, mit Rädern oder Ketten der mobilen Arbeitsmaschine (im Einzelnen nicht dargestellt) verbunden, um die Arbeitsmaschine fortzubewegen.

Der hydraulische Arbeitsantrieb 30 weist eine verstellbare Arbeits-Hydraulikpumpe 32, die über eine Antriebswelle 34 angetrieben wird, und einen Arbeits-Hydraulikmotor 36 auf, der über einen (hier geschlossenen) Hydraulikkreis mit der Arbeits-Hydraulikpumpe 32 gekoppelt ist. Eine Abtriebswelle des Arbeits-Hydraulikmotors 36 ist direkt oder indirekt mit einem Arbeitswerkzeug 38 (im Einzelnen nicht dargestellt) verbunden, um dieses anzutreiben. Bei dem Arbeitswerkzeug 38 kann es sich z.B. um eine Fräse (etwa eine Schneefräse, eine Loipenfräse oder eine Grabenfräse) handeln, die an einem Kommunalfahrzeug, Winterfahrzeug oder einem Minenräumfahrzeug als Anbaugerät verwendet wird. Der hydraulische Arbeitsantrieb kann in der mobilen Arbeitsmaschine selbst eingebaut sein, wobei das Arbeitswerkzeug etwa über eine Zapfwelle mit der Abtriebswelle des Arbeits-Hydraulikmotors 36 gekoppelt ist.

Die Fahr-Hydraulikpumpe 12 und die Arbeits-Hydraulikpumpe 32 werden gemeinsam von einem Verbrennungsmotor 2 als Energiequelle bzw. Leistungsquelle, insbesondere einem Dieselmotor, angetrieben. D.h. die Antriebswelle 14 der Fahr-Hydraulikpumpe und die Antriebswelle 34 der Arbeits-Hydraulikpumpe sind beide mit einer Ausgangswelle 4 des Verbrennungsmotors 2 gekoppelt, z.B. über jeweilige Getriebe.

Das beispielhafte hydraulische Antriebssystem der Figur 1 weist beispielhaft eine Fahr-Hydraulikpumpe, einen Fahr-Hydraulikmotor, eine Arbeits-Hydraulikpumpe und einen Arbeits-Hydraulikmotor auf. Im Allgemeinen können unabhängig voneinander ein oder mehrere Fahr-Hydraulikpumpen und/oder ein oder mehrere Fahr-Hydraulikmotoren und/oder ein oder mehrere Arbeits-Hydraulikpumpen und/oder ein oder mehrere Arbeits-Hydraulikmotoren vorgesehen sein.

Die Arbeits-Hydraulikpumpe 32 kann zum Schutz vor zu hoher Belastung über eine Druckabschneidung verfügen. Diese schwenkt die Arbeits-Hydraulikpumpe beim Überschreiten eines eingestellten Druckes auf einen kleineren Schwenkwinkel, wodurch im geschlossenen Hydraulikkreis normalerweise der Systemdruck reduziert wird. Dies führt allerdings dazu, dass die Geschwindigkeit der Abtriebswelle des Arbeits-Hydraulikmotors 36 reduziert wird. Bei gegebener Fahrgeschwindigkeit der mobilen Arbeitsmaschine steigt dadurch die Belastung und somit der Systemdruck im Arbeitsantrieb weiter. Dies kann zu einer weiteren Reduzierung des Schwenkwinkels an der Arbeits-Hydraulikpumpe und letztendlich zum Stillstand des Arbeits-Hydraulikmotors führen. Ist der Verbrennungsmotor nicht mehr in der Lage, der steigenden Leistungsanforderung des Arbeitsantriebsantriebs nachzukommen, kann es zu einer relativ starken Geschwindigkeitsänderung kommen (z.B. sogenannte Dieseldrückung). Durch das nachfolgend anhand von Figur 2 beschriebene Verfahren kann insbesondere dieses Verhalten vermieden werden.

Figur 2 zeigt ein Ablaufdiagramm gemäß einer beispielhaften Implementierung des Verfahrens zum Betreiben eines hydraulischen Antriebssystems einer mobilen Arbeitsmaschine mit einem Arbeitswerkzeug. Die beispielhafte Implementierung bezieht sich auf den Übergang zu einer Druckregelung bei Überschreiten eines Grenzdrucks im Arbeitsantrieb. Für eine ebenso mögliche Implementierung, in der ein Übergang zu einer Leistungsregelung bei Überschreiten einer Grenzleistung im Arbeitsantrieb, gelten die nachfolgenden Erläuterungen sinngemäß.

In Schritt 100 erfolgt zunächst eine Geschwindigkeitsregelung, d.h. eine Regelung des Fahrantriebs bzw. der Fahrgeschwindigkeit der mobilen Arbeitsmaschine entsprechend einer Soll-Fahrgeschwindigkeit (etwa durch einen Tempomaten). Dabei wird ein Arbeitsdruck des Arbeitsantriebs, d.h. ein Druck der Hydraulikflüssigkeit im Hydraulikkreis des Arbeitsantriebs, erfasst (etwa mittels eines Drucksensors) und in Schritt 110 geprüft, ob der Arbeitsdruck einen bestimmten, insbesondere einstellbaren, Grenzdruck überschreitet. Wenn dies nicht der Fall ist, wird mit Schritt 100 fortgefahren. Die Schritte 100, 110 erfolgen im Prinzip fortlaufend (etwa entsprechend einem regelmäßigen Zeitraster einer elektronischen Steuerung der Arbeitsmaschine und/oder des hydraulischen Antriebs), bis festgestellt wird, dass der Grenzdruck überschritten wird. Wie oben erläutert, steigt der Arbeitsdruck mit der Belastung des Arbeitswerkzeugs.

Wenn in Schritt 110 festgestellt wird, dass der Arbeitsdruck den Grenzdruck überschreitet, erfolgt ein Übergang (von der Geschwindigkeitsregelung) zu einer als Schritt 120 dargestellten Druckregelung entsprechend einem Solldruck des Arbeitsantriebs, wobei durch die Druckregelung die Fahr-Hydraulikpumpe verstellt wird (d.h. entsprechend angesteuert wird). Der Arbeitsdruck (des Arbeitsantriebs) kann als Istdruck bzw. Regelgröße, der/die auf den Solldruck eingeregelt werden soll, angesehen werden. Beispielsweise wird, wenn der Arbeitsdruck größer als der Solldruck ist, der Schwenkwinkel bzw. die Verdrängung der Fahr-Hydraulikpumpe verringert (was etwa durch Wahl geeigneter Konstanten in einem Proportional-Glied und/oder einem Integral-Glied und/oder einem Differential-Glied der Druckregelung implementiert werden kann), so dass in der Folge die Fahrgeschwindigkeit und damit die Belastung des Arbeitsantriebs und entsprechend der Arbeitsdruck abnehmen. Der Schwenkwinkel ist eine Ansteuergröße des hydraulischen Fahrantriebs, die in der beispielhaften Implementierung verstellt bzw. geändert wird (wobei auch andere Ansteuergrößen des Fahrantriebs denkbar sind). Die Regelstrecke schließt also Fahrantrieb und Arbeitsantrieb ein. Der Schwenkwinkel (oder eine andere steuerbare Größe der Fahr-Hydraulikpumpe) kann als Beispiel für eine Stellgröße angesehen werden. Der Solldruck ist kleiner dem Grenzdruck oder (insbesondere) gleich dem Grenzdruck. Bei diesem Übergang kann insbesondere die Fahrgeschwindigkeit verringert werden.

In Schritt 130 wird geprüft (z.B. fortlaufend während der Druckregelung), ob der weiterhin erfasste Arbeitsdruck einen Schwellendruck unterschreitet, d.h. ob der Istdruck (Arbeitsdruck) den Schwellendruck unterschreitet. Wenn dies nicht der Fall ist, wird mit der Druckregelung (Schritt 120) fortgefahren. Der Schwellendruck ist gleich oder kleiner als der Grenzdruck gewählt und insbesondere größer oder gleich dem Solldruck gewählt. Der Arbeitsdruck im Arbeitsantrieb hängt von der äußeren Belastung ab und fällt daher ausgehend vom Zustand hoher Belastung ab, wenn die Belastung abnimmt, wie vorstehend bei Schritt 120 beschrieben. Der jeweilige Arbeitsdruck wird etwa durch einen Drucksensor erfasst.

Wenn in Schritt 130 festgestellt wird, dass der Arbeitsdruck den Schwellendruck unterschreitet, erfolgt ein Übergang zur Geschwindigkeitsregelung, d.h. zur Regelung des Fahrantriebs bzw. der Fahrgeschwindigkeit entsprechend einer Soll-Fahrgeschwindigkeit bzw. es wird zu Schritt 100 zurückgesprungen. Bei diesem Übergang kann (muss aber nicht) vorgesehen sein, dass eine von der vorherigen (d.h. vor dem Übergang von der Geschwindigkeitsregelung zur Druckregelung) Soll-Fahrgeschwindigkeit verschiedene geänderte Soll-Fahrgeschwindigkeit gewählt wird. Die geänderte Soll-Fahrgeschwindigkeit kann z.B. verringert gegenüber der vorherigen Soll-Fahrgeschwindigkeit sein, d.h. verringert gegenüber der bei dem vorherigen Einsatz der Geschwindigkeitsregelung verwendeten Soll-Fahrgeschwindigkeit.

## Patentansprüche

1. Verfahren zur Steuerung eines hydraulischen Antriebssystems einer mobilen Arbeitsmaschine, an die ein Arbeitswerkzeug (38) angebaut oder anbaubar ist, wobei das hydraulische Antriebssystem einen hydraulischen Fahrantrieb (10) mit wenigstens einer verstellbaren Fahr-Hydraulikpumpe (12) und einen hydraulischen Arbeitsantrieb (30) für das Arbeitswerkzeug mit einer Arbeits-Hydraulikpumpe (32) aufweist;
wobei eine Geschwindigkeitsregelung (100) einer Fahrgeschwindigkeit des hydraulischen Fahrantriebs (10) entsprechend einer Soll-Fahrgeschwindigkeit erfolgt, **dadurch gekennzeichnet, dass** die Geschwindigkeitsregelung (100) der Fahrgeschwindigkeit des hydraulischen Fahrantriebs (10) entsprechend der Soll-Fahrgeschwindigkeit erfolgt, bis ein Arbeitsdruck des hydraulischen Arbeitsantriebs (30) einen vorgegebenen Grenzdruck überschreitet oder bis eine Arbeitsleistung des hydraulischen Arbeitsantriebs eine Grenzleistung überschreitet; und
wobei bei Überschreiten (110) des Grenzdrucks durch den Arbeitsdruck bzw. bei Überschreiten der Grenzleistung zu einer Druckregelung (120) des Arbeitsdrucks entsprechend einem Solldruck oder zu einer Leistungsregelung der Arbeitsleistung entsprechend einer Sollleistung übergegangen wird, wobei durch die Druckregelung bzw. durch die Leistungsregelung eine Ansteuergröße des hydraulischen Fahrantriebs (10) geändert wird.

2. Verfahren nach Anspruch 1, wobei der Solldruck kleiner als der Grenzdruck oder gleich dem Grenzdruck ist, insbesondere gleich dem Grenzdruck ist, bzw. wobei die Sollleistung kleiner als die Grenzleistung oder gleich der Grenzleistung ist, insbesondere gleich der Grenzleistung ist.

3. Verfahren nach Anspruch 1 oder 2, wobei, wenn während der Druckregelung (120) der Arbeitsdruck einen Schwellendruck, der kleiner als der Grenzdruck oder gleich dem Grenzdruck ist, unterschreitet (130), bzw., wenn während der Leistungsregelung die Arbeitsleistung eine Schwellenleistung, die kleiner als die Grenzleistung oder gleich der Grenzleistung ist, unterschreitet, wieder zu der Geschwindigkeitsregelung (100) der Fahrgeschwindigkeit entsprechend der Soll-Fahrgeschwindigkeit oder entsprechend einer geänderten Soll-Fahrgeschwindigkeit übergegangen wird.

4. Verfahren nach Anspruch 3, wobei der Schwellendruck größer als der Solldruck oder gleich dem Solldruck ist, bzw. wobei die Schwellenleistung größer als die Sollleistung oder gleich der Sollleistung ist.

5. Verfahren nach einem der Ansprüche 3 oder 4, wobei der Schwellendruck gleich dem Grenzdruck ist, bzw. wobei die Schwellenleistung gleich der Grenzleistung ist.

6. Verfahren nach einem der vorstehenden Ansprüche, wobei beim Überschreiten (110) des Grenzdrucks bzw. der Grenzleistung die Fahrgeschwindigkeit reduziert wird.

7. Verfahren nach einem der vorstehenden Ansprüche, wobei die Ansteuergröße ein Schwenkwinkel der Fahr-Hydraulikpumpe ist; ober wobei die Ansteuergröße ein Sollwert einer Steuerung oder Regelung des Fahrantriebs ist, insbesondere ein Sollwert für eine Fahrgeschwindigkeit oder ein Sollwert für eine Fahrantriebsleistung.

8. Verfahren nach einem der vorstehenden Ansprüche, wobei die Druckregelung (120) bzw. die Leistungsregelung einen Integral-Anteil umfasst, wobei während der Geschwindigkeitsregelung (100) der Fahrgeschwindigkeit entsprechend der Soll-Fahrgeschwindigkeit und/oder beim Übergang zur Druckregelung bzw. zur Leistungsregelung und/oder, soweit abhängig von einem der Ansprüche 4 bis 6, beim Übergang zur Regelung der Fahrgeschwindigkeit entsprechend der Soll-Fahrgeschwindigkeit der Integral-Anteil auf null gesetzt wird.

9. Verfahren nach Anspruch 8, wobei eine obere Integralgrenze dynamisch eingestellt wird.

10. Verfahren nach einem der vorstehenden Ansprüche, wobei der Grenzdruck bzw. die Grenzleistung einstellbar ist.

11. Vorrichtung zur Datenverarbeitung umfassend einen Prozessor, die so konfiguriert ist, dass sie das Verfahren nach einem der vorstehenden Ansprüche ausführt.

12. Hydraulisches Antriebssystem einer mobilen Arbeitsmaschine, an die ein Arbeitswerkzeug (38) angebaut oder anbaubar ist, aufweisend einen hydraulischen Fahrantrieb (10) mit wenigstens einer verstellbaren Fahr-Hydraulikpumpe (12) und einen hydraulischen Arbeitsantrieb (30) für das Arbeitswerkzeug mit einer optional verstellbaren Arbeits-Hydraulikpumpe (32); weiter umfassend eine Vorrichtung zur Datenverarbeitung nach Anspruch **11,** die zur Steuerung des hydraulischen Fahrantriebs und des hydraulischen Arbeitsantriebs verwendet wird.

13. Hydraulisches Antriebssystem nach Anspruch 12, wobei die wenigstens eine Fahr-Hydraulikpumpe und die Arbeits-Hydraulikpumpe gemeinsam von einer Energiequelle, insbesondere gemeinsam von einem Verbrennungsmotor (2) oder einem Elektromotor, angetrieben werden.

14. Computerprogramm umfassend Befehle, die bei der Ausführung des Programms durch einen Computer diesen veranlassen, das Verfahren nach einem der Ansprüche 1 bis 10 auszuführen.

15. Computerlesbarer Datenträger, auf dem das Computerprogramm nach Anspruch 14 gespeichert ist.

## Claims

1. Method for controlling a hydraulic drive system of a mobile working machine to which a working tool (38) is or can be attached, wherein the hydraulic drive system has a hydraulic traction drive (10) with at least one adjustable hydraulic traction pump (12) and has a hydraulic working drive (30) for the working tool with a working hydraulic pump (32);
wherein speed control (100) of a driving speed of the hydraulic traction drive (10) is performed in accordance with a setpoint driving speed, **characterized in that** the speed control (100) of the driving speed of the hydraulic traction drive (10) is performed in accordance with the setpoint driving speed, until a working pressure of the hydraulic working drive (30) exceeds a specified limit pressure or until a working power of the hydraulic working drive exceeds a limit power; and
wherein, when the limit pressure is exceeded (110) by the working pressure or when the limit power is exceeded, a changeover is made to pressure control (120) of the working pressure in accordance with a setpoint pressure or to power control of the working power in accordance with a setpoint power, wherein a control variable of the hydraulic traction drive (10) is changed by the pressure control or by the power control.

2. Method according to Claim 1, wherein the setpoint pressure is less than the limit pressure or equal to the limit pressure, in particular equal to the limit pressure, or wherein the setpoint power is less than the limit power or equal to the limit power, in particular equal to the limit power.

3. Method according to Claim 1 or 2, wherein, if the working pressure falls below (130) a threshold pressure which is less than the limit pressure or equal to the limit pressure during the pressure control (120), or, if the working power falls below a threshold power which is less than the limit power or equal to the limit power during the power control, a changeover is made back to the speed control (100) of the driving speed in accordance with the setpoint driving speed or in accordance with a changed setpoint driving speed.

4. Method according to Claim 3, wherein the threshold pressure is greater than the setpoint pressure or equal to the setpoint pressure, or wherein the threshold power is greater than the setpoint power or equal to the setpoint power.

5. Method according to either of Claims 3 and 4, wherein the threshold pressure is equal to the limit pressure, or wherein the threshold power is equal to the limit power.

6. Method according to any of the preceding claims, wherein the driving speed is reduced when the limit pressure or the limit power is exceeded (110).

7. Method according to any of the preceding claims, wherein the control variable is a pivot angle of the hydraulic traction pump; or wherein the control variable is a setpoint value for open-loop control or closed-loop control of the traction drive, in particular a setpoint value for a driving speed or a setpoint value for a traction drive power.

8. Method according to any of the preceding claims, wherein the pressure control (120) or the power control comprises an integral component, wherein the integral component is set to zero during the speed control (100) of the driving speed in accordance with the setpoint driving speed and/or during the changeover to pressure control or to power control and/or, where dependent on any of Claims 4 to 6, during the changeover to control of the driving speed in accordance with the setpoint driving speed.

9. Method according to Claim 8, wherein an upper integral limit is dynamically adjusted.

10. Method according to any of the preceding claims, wherein the limit pressure or the limit power is adjustable.

11. Data processing device comprising a processor which is configured such that it executes the method according to any of the preceding claims.

12. Hydraulic drive system of a mobile working machine to which a working tool (38) is or can be attached, comprising a hydraulic traction drive (10) with at least one adjustable hydraulic traction pump (12) and a hydraulic working drive (30) for the working tool with an optionally adjustable working hydraulic pump (32); further comprising a data processing device according to Claim 11 which is used for controlling the hydraulic traction drive and the hydraulic working drive.

13. Hydraulic drive system according to Claim 12, wherein the at least one hydraulic traction pump and the working hydraulic pump are jointly driven by an energy source, in particular jointly driven by an internal combustion engine (2) or an electric motor.

14. Computer program comprising instructions which, when the program is executed by a computer, cause the computer to execute the method according to any of Claims 1 to 10.

15. Computer-readable data carrier on which the computer program according to Claim 14 is stored.

## Revendications

1. Procédé de commande d'un système d'entraînement hydraulique d'un engin de travail mobile, sur lequel un outil de travail (38) est monté ou peut être monté, le système d'entraînement hydraulique comportant un entraînement de déplacement (10) hydraulique avec au moins une pompe hydraulique de déplacement (12) ajustable et un entraînement de travail (30) hydraulique pour l'outil de travail avec une pompe hydraulique de travail (32) ;
une régulation de vitesse (100) d'une vitesse de déplacement de l'entraînement de déplacement hydraulique (10) étant effectuée conformément à une vitesse de déplacement théorique, **caractérisé en ce que** la régulation de vitesse (100) de la vitesse de déplacement de l'entraînement de déplacement (10) hydraulique est effectuée conformément à la vitesse de déplacement théorique, jusqu'à ce qu'une pression de travail de l'entraînement de travail (30) hydraulique dépasse une pression limite prédéfinie ou jusqu'à ce qu'une puissance de travail de l'entraînement de travail hydraulique dépasse une puissance limite ; et
un passage à une régulation de pression (120) de la pression de travail conformément à une pression théorique ou à une régulation de puissance de la puissance de travail conformément à une puissance théorique étant effectué en cas de dépassement (110) de la pression limite par la pression de travail ou en cas de dépassement de la puissance limite, une variable de pilotage de l'entraînement de déplacement (10) hydraulique étant modifiée par la régulation de pression ou par la régulation de puissance.

2. Procédé selon la revendication 1, la pression théorique étant inférieure à la pression limite ou étant égale à la pression limite, en particulier étant égale à la pression limite, la puissance théorique étant inférieure à la puissance limite ou étant égale à la puissance limite, en particulier étant égale à la puissance limite.

3. Procédé selon la revendication 1 ou 2, un passage à la régulation de vitesse (100) de la vitesse de déplacement conformément à la vitesse de déplacement théorique ou conformément à une vitesse de déplacement théorique modifiée étant à nouveau effectué lorsque la pression de travail ne dépasse pas, pendant la régulation de pression (120), une pression de seuil qui est inférieure à la pression limite ou est égale à la pression limite (130) ou lorsque la puissance de travail ne dépasse pas, pendant la régulation de puissance, une puissance de seuil qui est inférieure à la puissance limite ou est égale à la puissance limite.

4. Procédé selon la revendication 3, la pression de seuil étant supérieure à la pression théorique ou étant égale à la pression théorique, la puissance de seuil étant supérieure à la puissance théorique ou étant égale à la puissance théorique.

5. Procédé selon l'une des revendications 3 ou 4, la pression de seuil étant égale à la pression limite ou la puissance de seuil étant égale à la puissance limite.

6. Procédé selon l'une des revendications précédentes, la vitesse de déplacement étant réduite en cas de dépassement (110) de la pression limite ou de la puissance limite.

7. Procédé selon l'une des revendications précédentes, la variable de pilotage étant un angle de pivotement de la pompe hydraulique de déplacement ; ou la variable de pilotage étant une valeur théorique d'une commande ou d'une régulation de l'entraînement de déplacement, en particulier une valeur théorique pour une vitesse de déplacement ou une valeur théorique pour une puissance d'entraînement de déplacement.

8. Procédé selon l'une des revendications précédentes, la régulation de pression (120) ou la régulation de puissance comprenant une composante intégrale, la composante intégrale étant mise à zéro pendant la régulation de vitesse (100) de la vitesse de déplacement conformément à la vitesse de déplacement théorique et/ou lors du passage à la régulation de pression ou à la régulation de puissance, et/ou, selon une des revendications 4 à 6, lors du passage à la régulation de la vitesse de déplacement conformément à la vitesse de déplacement théorique.

9. Procédé selon la revendication 8, une limite intégrale supérieure étant réglée de manière dynamique.

10. Procédé selon l'une des revendications précédentes, la pression limite ou la puissance limite pouvant être réglée.

11. Dispositif de traitement de données comprenant un processeur, qui est configuré de telle sorte qu'il exécute le procédé selon l'une des revendications précédentes.

12. Système d'entraînement hydraulique d'un engin de travail mobile, sur lequel un outil de travail (38) est monté ou peut être monté, comportant un entraînement de déplacement (10) hydraulique avec au moins une pompe hydraulique de déplacement (12) ajustable et un entraînement de travail (30) hydraulique pour l'outil de travail avec une pompe hydraulique de travail (32) en option ajustable ; comprenant par ailleurs un dispositif de traitement de données selon la revendication 11, qui est utilisé pour commander l'entraînement de déplacement hydraulique et l'entraînement de travail hydraulique.

13. Système d'entraînement hydraulique selon la revendication 12, l'au moins une pompe hydraulique de déplacement et la pompe hydraulique de travail étant entraînées conjointement par une source d'énergie, en particulier conjointement par un moteur à combustion interne (2) ou un moteur électrique.

14. Programme informatique comprenant des instructions qui, lors de l'exécution du programme par un ordinateur, amènent ce dernier à exécuter le procédé selon l'une des revendications 1 à 10.

15. Support de données lisible par ordinateur, sur lequel est stocké le programme informatique selon la revendication 14.
